(19) Europäisches Patentamt
European Patent Office
Office européen des brevets

(11) **EP 4 141 762 A1**

(12) **EUROPEAN PATENT APPLICATION**

(43) Date of publication:
**01.03.2023 Bulletin 2023/09**

(21) Application number: **22191437.7**

(22) Date of filing: **22.08.2022**

(51) International Patent Classification (IPC):
**G06Q 10/083** *(2023.01)* **G06Q 10/0631** *(2023.01)*
**G06Q 10/04** *(2012.01)* **G06N 20/00** *(2019.01)*

(52) Cooperative Patent Classification (CPC):
**G06Q 10/083; G06N 20/00; G06Q 10/04;
G06Q 10/06311**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.08.2021 JP 2021136416**

(71) Applicant: **Rakuten Group, Inc.
Setagaya-ku
Tokyo 158-0094 (JP)**

(72) Inventors:
• **Li, Yanyan
Tokyo, 158-0094 (JP)**
• **Poliyapram, Vinayaraj
Tokyo, 158-0094 (JP)**
• **Mede, Kyle
Tokyo, 158-0094 (JP)**

(74) Representative: **Hoffmann Eitle
Patent- und Rechtsanwälte PartmbB
Arabellastraße 30
81925 München (DE)**

(54) **DELIVERY MANAGEMENT SYSTEM, DELIVERY MANAGEMENT METHOD, AND PROGRAM**

(57) Provided is a delivery management system configured to: generate, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and input, to a machine learning model, the delivery destination information on the plurality of delivery destinations included in the training data, and train the machine learning model based on information indicating predicted delivery clusters, which is output from the machine learning model, and based on the delivery clusters into which the delivery destinations are classified, and which are included in the training data.

FIG.2

## Description

BACKGROUND OF THE INVENTION

Field of the Invention

The present invention relates to a delivery management system, a delivery management method, and a program.

Description of the Related Art

In a system which delivers packages to many delivery destinations, packages are collected at a distribution base, and packages to be delivered are assigned to each of a plurality of drivers there.
In Japanese Patent Translation Publication No. 2021-510866, there is disclosed a configuration in which an expected delivery efficiency is determined, to thereby determine delivery routes of a plurality of drivers.

SUMMARY OF THE INVENTION

When routes of delivery persons are to be determined, a method involving first assigning packages to delivery persons and then determining a delivery route for delivering the assigned packages for each of the delivery persons is considered. When this method is employed, it is important to appropriately assign the packages to the delivery persons.
When a general clustering method is used for the assignment of the packages to the delivery persons, it is difficult to improve the assignment. More specifically, for example, it is difficult to adapt the method to detailed requirements, such as a reduction in imbalance among the numbers of delivery destinations assigned to the delivery persons and consideration of travel routes.
The present invention has been made in view of the above-mentioned problem, and has an object to provide a technology for facilitating improvement in assignment of packages to delivery persons.
In order to solve the above-mentioned problem, according to at least one embodiment of the present invention, there is provided a delivery management system including: a training data generation means configured to generate, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and a training means configured to input, to a machine learning model, the delivery destination information on the plurality of delivery destinations included in the training data, and to train the machine learning model based on information indicating predicted delivery clusters, which is output from the machine learning model, and based on the delivery clusters into which the plurality of delivery destinations are classified, and which are included in the training data.
Further, according to at least one embodiment of the present invention, there is provided a delivery management method including: generating, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and inputting, to a machine learning model, the delivery destination information on the plurality of delivery destinations included in the training data, and training the machine learning model based on information indicating predicted delivery clusters, which is output from the machine learning model, and based on the delivery clusters into which the plurality of delivery destinations are classified, and which are included in the training data.
Further, according to at least one embodiment of the present invention, there is provided a program for causing a computer to function as: a training data generation means configured to generate, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and a training means configured to input, to a machine learning model, the delivery destination information on the plurality of delivery destinations included in the training data, and to train the machine learning model based on information indicating predicted delivery clusters, which is output from the machine learning model, and based on the delivery clusters into which the plurality of delivery destinations are classified, and which are included in the training data.
In one aspect of the present invention, the clustering processing may include acquiring a representative position of each of a plurality of past delivery destination lists each of which includes a plurality of delivery destinations of delivery executed by one delivery person, executing clustering of classifying the plurality of past delivery destination lists into preliminary clusters based on the acquired representative positions, and determining delivery destinations belonging to a plurality of delivery clusters included in the training data based on the preliminary clusters into which the plurality of past delivery destination lists are classified and based on the plurality of delivery destinations included in the plurality of past delivery destination lists.
In one aspect of the present invention, the training means may be configured to: calculate, based on each of delivery clusters predicted for each of the plurality of delivery destinations, the number of delivery destinations included in each of the predicted delivery clusters; determine a loss function based on the number of delivery destinations calculated for each of the predicted delivery clusters and a reference value of the number of delivery destinations; calculate a value of the loss function based on the predicted delivery clusters and the delivery clusters in the training data; and train the machine learning model based on the calculated value.

In one aspect of the present invention, the training means may be configured to: calculate, based on each of delivery clusters predicted for each of the plurality of delivery destinations, a representative position of each of the predicted delivery clusters; determine a loss function based on the representative positions calculated for the predicted delivery clusters and representative positions of the delivery clusters in the training data; calculate a value of the loss function based on the predicted delivery clusters and the delivery clusters in the training data; and train the machine learning model based on the calculated value.

In one aspect of the present invention, the delivery management system may further include a delivery cluster determination means configured to input delivery destination information on delivery destinations into the machine learning model trained by the training means, and to determine delivery clusters to which the input delivery destinations belong based on the information indicating the delivery clusters, which is output from the machine learning model.

In one aspect of the present invention, the machine learning model may be configured to output, when the delivery destination information on one of the delivery destinations is input, a value indicating a probability that the input delivery destination belongs to each of the plurality of delivery clusters, and the delivery cluster determination means may be configured to determine a delivery cluster to which the input delivery destination belongs based on the values indicating the probability.

In one aspect of the present invention, the delivery cluster determination means may be configured to move, when any one of the determined delivery clusters to which the delivery destinations belong dissatisfy a predetermined condition, based on the value indicating the probability, a delivery destination belonging to one of the delivery clusters dissatisfying the predetermined condition so that the delivery destination belongs to another delivery cluster.

According to the at least one embodiment of the present invention, it is possible to more easily improve assignment of the packages to the delivery persons.

BRIEF DESCRIPTION OF THE DRAWINGS

FIG. 1 is a diagram for illustrating an example of a hardware configuration of a delivery management system according to at least one embodiment of the present invention.
FIG. 2 is a block diagram for illustrating functions implemented by the delivery management system.
FIG. 3 is a flowchart for illustrating an example of processing executed by a training data generation module.
FIG. 4 is a diagram for schematically illustrating a relationship among delivery destinations, delivery destination lists, and a delivery cluster.
FIG. 5 is a flowchart for illustrating an example of processing executed by a model training module.
FIG. 6 is a flowchart for illustrating an example of processing executed by a delivery destination acquisition module, a delivery cluster determination module, and a route determination module.

DESCRIPTION OF THE EMBODIMENS

Now, at least one embodiment of the present invention is described with reference to the drawings. Redundant description of configurations denoted by the same reference symbols is omitted. In the at least one embodiment, description is given of a system which uses a machine learning model for classifying delivery destinations into delivery clusters to determine delivery persons responsible for packages to be delivered to the delivery destinations.

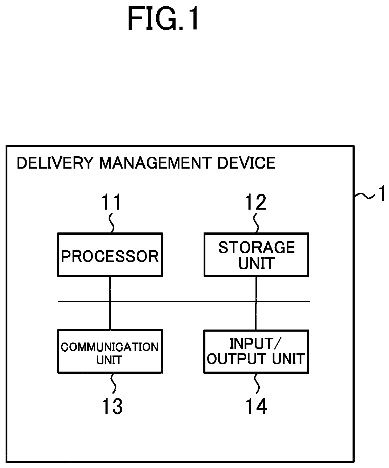

FIG. 1 is a diagram for illustrating an example of a delivery management system according to the at least one embodiment of the present invention. The delivery management system includes a delivery management device 1.

The delivery management device 1 includes a processor 11, a storage unit 12, a communication unit 13, and an input/output unit 14. The delivery management device 1 is, for example, a server computer. Functions of the delivery management device 1 described below may be implemented by a plurality of server computers.

The processor 11 operates in accordance with a program stored in the storage unit 12. The processor 11 controls the communication unit 13 and the input/output unit 14. The above-mentioned program may be provided through, for example, the Internet, or may be provided by being stored in a flash memory, a DVD-ROM, or another computer-readable storage medium.

The storage unit 12 is formed of memory devices, such as a RAM and a flash memory, and an external storage device, such as a hard disk drive. The storage unit 12 stores the above-mentioned program. The storage unit 12 also stores information and calculation results that are input from the processor 11, the communication unit 13, and the input/output unit 14.

The communication unit 13 implements a function of communicating with another device, and is formed of, for example, an integrated circuit for implementing a wireless LAN or a wired LAN, an antenna, and a communication terminal. Under control of the processor 11, the communication unit 13 inputs information received from another device to the processor 11 and the storage unit 12, and transmits information to another device.

The input/output unit 14 is formed of, for example, a video controller for controlling a display output device and a controller for acquiring data from an input device. Examples of the input device include a keyboard, a mouse, and a touch panel. The input/output unit 14 outputs display data to the display output device under the control of the processor 11, and acquires data input by a user operating the input device. The display output device is, for example, a display device connected to the outside.

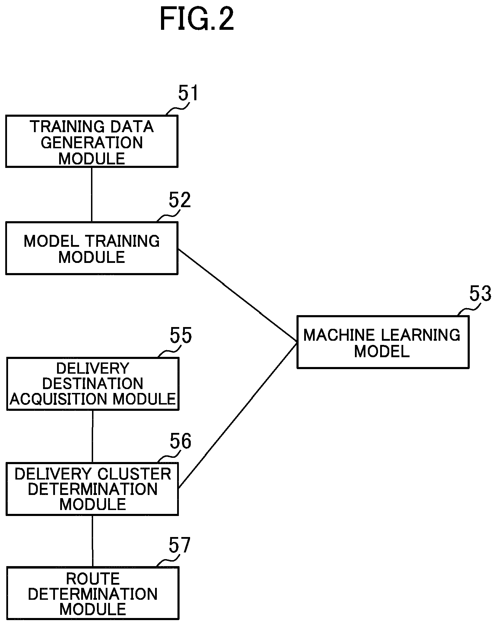

Description is now given of functions provided by the delivery management system. FIG. 2 is a block diagram for illustrating functions implemented by the delivery management system. The delivery management system includes, in terms of function, a training data generation module 51, a model training module 52, a machine learning model 53, a delivery destination acquisition module 55, a delivery cluster determination module 56, and a route determination module 57. Those functions are implemented by the processor 11 executing programs stored in the storage unit 12, to thereby control the communication unit 13 and the like.

The training data generation module 51 generates, through clustering processing, training data including: information on a plurality of delivery destinations, which includes positions of past delivery destinations; and ground truth data indicating delivery clusters into which each of the plurality of delivery destinations is classified, and each of which is associated with a delivery person. The clustering processing is described later. The information on the delivery destinations includes information indicating positions of the delivery destinations. The information indicating the positions of the delivery destinations may include at least one of latitudes and longitudes of the delivery destinations, angles as viewed from a delivery base, and distances to the delivery base. Moreover, the information on the delivery destinations may include first three digits of postal codes of the delivery destinations.

Moreover, the training data generation module 51 may generate, as information for the learning, an average of the numbers of delivery destinations included in the plurality of delivery clusters, and positions of the centers of gravity of the plurality of delivery clusters. The position of the center of gravity is an example of a representative position representing the delivery cluster. In place of the center of gravity, for example, a position of a delivery destination closest to the center of gravity may be used. Moreover, the average of the numbers of the delivery destinations is an example of a reference value of the number of delivery destinations in the delivery cluster, and another value such as a median of the numbers of the delivery destinations may be used as the reference value of the number of delivery destinations.

The model training module 52 inputs the delivery destination information on the plurality of delivery destinations included in the generated training data into the machine learning model 53. The model training module 52 trains the machine learning model 53 based on information indicating predicted delivery clusters, which is output from the machine learning model 53 for that input, and on the delivery clusters in the training data. The delivery destinations are classified into the delivery clusters in the training data. The machine learning model 53 operates under a publicly known algorithm for the machine learning such as so-called neural network. When the delivery destination is input, the machine learning model 53 outputs value which indicates a probability that this delivery destination belongs to each of the plurality of delivery clusters (belonging probability). The machine learning model 53 may be a model implementing machine learning such as a random forest or a support vector machine (SVM).

The delivery destination acquisition module 55 acquires information (delivery destination information) on a plurality of delivery destinations being targets of the assignment to the delivery persons. The delivery destination information includes information indicating positions of the delivery destinations. The information indicating the positions of the delivery destinations may include the latitudes and the longitudes of the delivery destinations, the angles as viewed from the delivery base, and the distances to the delivery base. Moreover, the delivery destination information may include the first three digits of the postal codes of the delivery destinations.

The delivery cluster determination module 56 inputs the acquired information on the delivery destinations into the trained machine learning model. And the delivery cluster determination module 56 determines delivery clusters to which the delivery destinations whose information has been input belong based on information indicating the delivery clusters. The information indicating the delivery clusters is output from the machine learning model. The delivery cluster determination module 56 stores the delivery destinations and the determined delivery clusters in the storage unit 12 in association with each other. The information indicating the delivery clusters, which is output from the machine learning model, may be, for example, values each indicating a probability that each delivery destination belongs to corresponding one of the plurality of delivery clusters. Moreover, the delivery cluster determination module 56 outputs a delivery person corresponding to each of the determined delivery clusters as a delivery person responsible for the delivery destination.

The route determination module 57 determines, based on the positions of the plurality of delivery destinations assigned to each of the delivery persons, a route passing through the plurality of delivery destinations. The determination of the route may be made by approximated solutions of so-called traveling salesman problem, for example, a combination of parallel cheapest insertion and Tabu search.

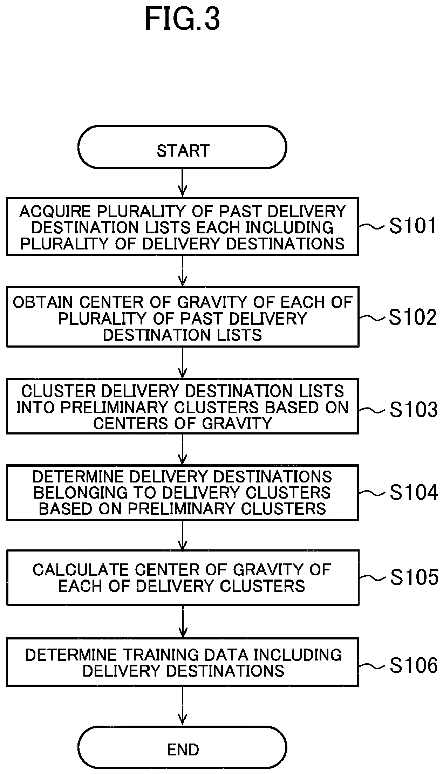

Description is now given of the generation of the training data to be used for the machine learning. FIG. 3 is a flowchart for illustrating an example of processing executed by the training data generation module 51.

The training data generation module 51 first acquires the plurality of past delivery destination lists each of which includes the plurality of delivery destinations (Step S101). Each of the delivery destination lists includes information on a plurality of delivery destinations to which one delivery person delivered packages in delivery of one set (or on one day) from the delivery base in the past delivery of packages. Moreover, It is preferred that the training data generation module 51 acquires, as a processing target, the plurality of delivery destination lists at only one distribution base, because reflection of a characteristic of a delivery range of this distribution base in the machine learning model 53 is facilitated.

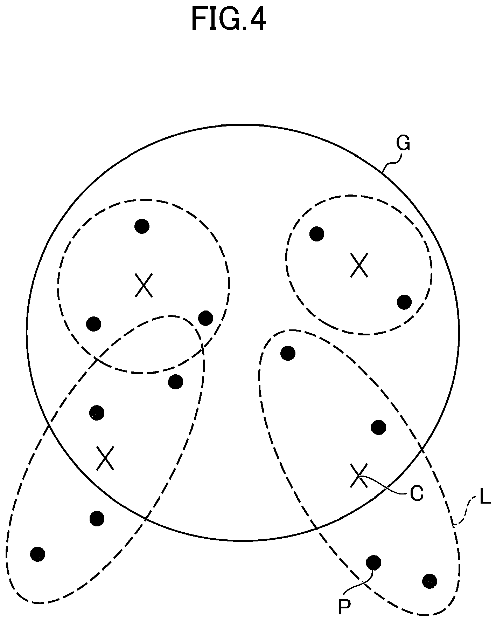

The past delivery destination list includes a date of delivery, the delivery base, a delivery company code, vehicle information, and information on the plurality of delivery destinations, and is used for actual delivery at the delivery base. The vehicle information includes vehicle identification information, a loadable weight, and an operable time period. The information on each of the delivery destinations includes order numbers, postal codes, addresses, specified delivery time periods, and identification information and weights of the packages. Although not shown in FIG. 4, when the training data generation module 51 acquires the delivery destination list, the training data generation module 51 calculates the latitude and the longitude of each of the delivery destinations from the address of each of the delivery destinations included in this delivery destination list, further calculates, from the latitude and the longitude of this delivery destination and a latitude and a longitude of the delivery base, a distance from the delivery base to the delivery destination and a direction of the delivery destination from the delivery base, and stores, as the delivery destination information, the distance and the direction as well as the first three digits of the postal code of the delivery destination in the storage unit 12.

When the delivery destination lists are acquired, the training data generation unit 51 clusters the plurality of delivery destinations included in the plurality of delivery destination lists into the plurality of delivery clusters through clustering processing described in Step S102 to Step S104. The clustering processing is now described in sequence.

When the delivery destination lists are acquired, the training data generation module 51 acquires a center of gravity of each of the plurality of past delivery destination lists (Step S102). More specifically, for each of the delivery destination lists, the training data generation module 51 calculates the center of gravity of the positions of the plurality of delivery destinations included in the delivery destination list, and acquires this center of gravity as a center of gravity of the delivery destination list. The center of gravity is a type of a representative position of the delivery destination list. In place of the center of gravity, a representative position calculated through use of another method, for example, a position of a delivery destination closest to the center of gravity, may be used.

After that, the training data generation module 51 clusters the delivery destination lists into preliminary clusters based on the center of gravity (Step S103) . This clustering may be executed by a publicly known clustering method such as the k-means method. In this case, the clustering may be executed so that the number of preliminary clusters is an average number of delivery persons at the delivery base. The average number of delivery persons may be, for example, an average number of delivery persons per day in the past twenty days.

When the delivery destination lists are clustered, the training data generation module 51 determines delivery destinations belonging to a plurality of delivery clusters based on the preliminary clusters and the plurality of delivery destinations included in the delivery destination lists (Step S104). In this case, the delivery cluster and the preliminary cluster correspond to each other in a one-to-one manner. The training data generation module 51 determines the delivery destinations included in the delivery destination lists belonging to the corresponding preliminary cluster as delivery destinations belonging to the delivery cluster.

After that, the training data generation module 51 calculates the center of gravity of each of the delivery clusters (Step S105). This center of gravity is used for the training of the machine learning model. Moreover, when the delivery destinations belonging to the delivery clusters are determined, the training data generation unit 51 determines the training data including the information on the plurality of delivery destinations and the ground truth data including the delivery clusters including the delivery destinations (Step S106). In this case, the training data also includes an average of the numbers of delivery destinations included in the plurality of delivery clusters, and the positions of the centers of gravity of the plurality of delivery clusters.

FIG. 4 is a diagram for schematically illustrating a relationship among the delivery destinations, the delivery destination lists, and the delivery cluster. In FIG. 4, there are illustrated a region G (region enclosed by the solid line) corresponding to the delivery cluster, regions L corresponding to the delivery destination lists (regions each enclosed by the broken line), centers of gravity C of delivery destination lists, and positions P of delivery destinations. As can be seen from FIG. 4, some of the delivery destinations belonging to the delivery cluster have positions P not included the region G of the delivery cluster. To one delivery destination list, a plurality of delivery destinations are highly likely to be assigned in consideration of an actual environment relating to the delivery such as roads. Thus, through use of the clustering of the delivery destination lists, in the training data for the machine learning model to identify the delivery persons, it is possible to generate the delivery clusters (ground truth data) in consideration of the actual state relating to the delivery.

In this case, the clustering of the delivery destination lists to the preliminary clusters, and the determination of the delivery clusters to which the delivery destinations belong in Step S103 and Step S104 do not use who the delivery persons responsible for the delivery destination lists are. In the actual delivery, delivery persons responsible for a certain area are less likely to change in principle, but in some cases, the delivery persons change due to absence of the delivery persons. Thus, in the training of the machine learning model 53, it is not easy to use the information on the delivery persons. Through this clustering, even in a state in which the information on the delivery persons is difficult to use, the machine learning model 53 for determining the delivery persons can be trained.

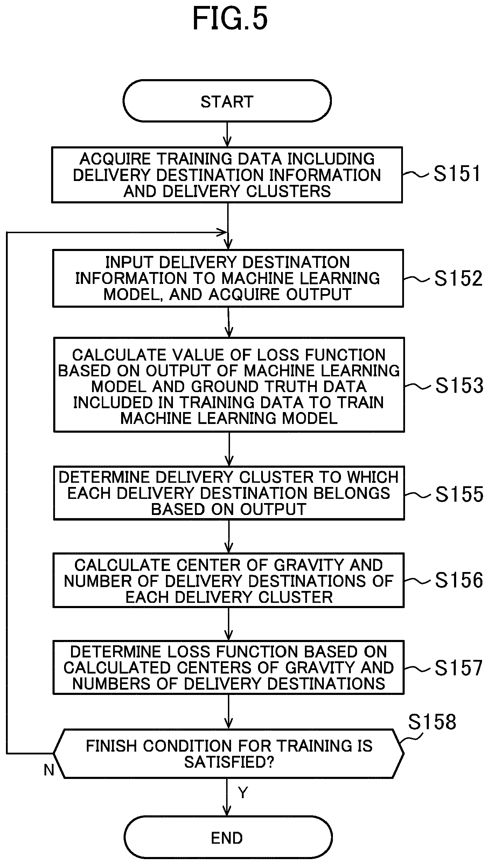

When the training data is generated, the machine learning model is trained. Description is now given of the training. FIG. 5 is a flowchart for illustrating an example of processing executed by the model training module 52. The model training module 52 acquires the training data (Step S151). The training data includes the delivery destination information being the information on the delivery destinations and the delivery clusters being the ground truth data.

Processing steps of Step S152 and Step S153 are processing steps of training the machine learning model 53 through use of the training data, and are actually processed as one batch for the plurality of pieces of delivery destination information and ground truth data. The processing steps of from Step S155 to Step S157 are processing steps of tuning a loss function used for a next batch. It is assumed that an initial loss function is set before the processing executed for the first time.

For each of the plurality of the delivery destination information, the model training module 52 inputs the delivery destination information included in the training data into the machine learning model 53, and acquires the output (Step S152). In the delivery destination information, the distances to the delivery base, the directions as viewed from the delivery base, and the postal codes are input to the machine learning model 53. When the delivery destination information is input, the machine learning model 53 outputs the values each indicating a probability (belonging probability) that the delivery destination belongs to corresponding one of the plurality of delivery clusters.

After that, the model training module 52 calculates a value of the loss function based on the output of the machine learning model 53 to which the delivery destination information is input and the ground truth data on the delivery clusters included in the training data, and trains the machine learning model 53 by, for example, the gradient descent method based on the value of the loss function (Step S153). The training of the machine learning model 53 may be, for example, changes in weighting parameters of a neural network.

The machine learning model 53 applies processing of embedding to the postal codes, and inputs the processed data to subsequent processing in the machine learning model 53. In the training of the machine learning model 53, dropout, batch normalization, and a ReLu activation function may be used.

After that, processing of determining a loss function used for a next batch is executed. First, the model training module 52 determines the delivery cluster to which each delivery destination belongs based on the output obtained for each delivery destination (Step S155). More specifically, the model training module 52 determines a delivery cluster having the largest value of the obtained belonging probability as the delivery cluster to which the delivery destination belongs (predicted delivery cluster indicated by the output of the machine learning model).

When the delivery cluster to which each of the plurality of delivery destinations belongs is determined, the model training module 52 calculates the center of gravity and the number of delivery destinations belonging thereto (number of elements) for each delivery cluster (Step S156). After that, the model training module 52 determines the loss function based on the calculated centers of gravity and the numbers of the delivery destinations (Step S157).

The loss function is given by a formula for calculating a cross entropy CE in which weighting coefficients are added.

$$CE = -\sum_j^K \alpha_j * t_j \log(S_j)$$

In this expression, "j" is a number assigned to identify the delivery cluster, and K is the number of delivery clusters. Moreover, $S_j$ is the output of the machine learning model 53 normalized by a softmax function, and $t_j$ is the ground truth data. Further, $\alpha_j$ is the weighting coefficient for a j-th delivery cluster. The model training module 52 determines the weighting coefficients based on the numbers of the elements and the centers of gravity of the delivery clusters calculated in Step S155.

More specifically, the model training module 52 determines the weighting coefficient in the j-th delivery cluster based on a first difference and a second difference. The first difference is a difference between the number of delivery destinations calculated for the j-th delivery cluster and the average of the numbers of delivery destinations included in the training data (average is an example of the reference value). The second difference is a difference between the center of gravity calculated for the j-th delivery cluster (center of gravity is an example of the representative position) and the center of gravity of the j-th delivery cluster included in the training data.

When those differences increase, a larger weight is assigned in order to correct the delivery cluster. As a result, a balance among the delivery clusters can be improved. The weighting coefficient may be determined based on any one of the first difference (difference from the average of the numbers of delivery destinations) and the second difference (difference between the centers of gravity). Even in this case, a certain effect can be provided.

After that, when a finish condition for the training is not satisfied ("N" in Step S158), the model training module 52 executes again the processing from Step S152, and when the finish condition for the training is satisfied ("Y" in Step S158), the model training module 52 finishes the processing. The finish condition for the training may simply be the number of times of execution of the loop, or may be such a condition that a value indicating a processing performance of the machine learning model 53 at the current time exceeds a threshold value. The value indicating the processing performance is calculated through use of test data.

Through the processing steps of from Step S154 to Step S157, as compared with a case of training simply from the delivery destinations and the ground truth data on the delivery clusters to which the delivery destinations belong, it is possible to train the machine learning model so that a variance of the numbers of elements of the delivery clusters is suppressed, and hence precision of the assignment of the delivery destinations and the packages to the delivery persons can be increased.

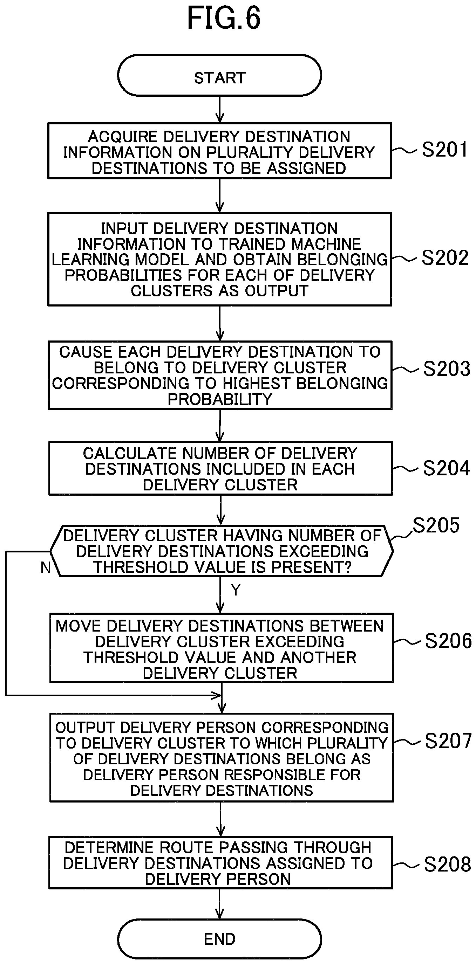

Description is now given of processing of assigning the deliver destinations to the delivery persons through use of the trained machine learning model 53. FIG. 6 is a flowchart for illustrating an example of processing executed by the delivery destination acquisition module 55, the delivery cluster determination module 56, and the route determination module 57.

First, the delivery destination acquisition module 55 acquires the delivery destination information on the plurality of delivery destinations to be assigned to the delivery persons (Step S201). The delivery destination information may include at least the angle as viewed from the delivery base, the distance to the delivery base, and the first three digits of the postal code of each of the delivery destinations, which indicate the position of each of the delivery destinations.

The delivery cluster determination module 56 inputs the acquired delivery destination information on each of the plurality of delivery destinations into the trained machine learning model 53, and acquires the belonging probabilities for each of the delivery clusters as the output of the machine learning model 53 (Step S202). Moreover, the delivery cluster determination module 56 causes each delivery destination to belong to the delivery cluster corresponding to the highest belonging probability (Step S203).

When the delivery cluster to which each of the plurality of delivery destinations belongs is determined, the delivery cluster determination module 56 calculates the number of delivery destinations included in each delivery cluster (Step S204). The number of delivery destinations is an index used to determine whether or not the delivery cluster satisfies a predetermined condition relating to the delivery. The delivery cluster determination module 56 may calculate, as the index, at least one of a sum of weights of the packages delivered to the delivery destinations assigned to the delivery cluster or a sum of volumes of those packages.

When the indices are calculated for the delivery clusters, the delivery cluster determination module 56 determines whether or not delivery cluster which has the calculated number of delivery destinations exceeding a threshold value is present (Step S205). This determination is an example of processing of determining whether or not any of the delivery clusters to which the delivery destinations are classified satisfy a predetermined condition relating to the delivery. For example, the delivery cluster determination module 56 may further determine whether or not the sum of the weights or the volumes of the packages delivered to the delivery destinations assigned to the delivery cluster exceeds a threshold value. Moreover, the delivery cluster determination module 56 may predict a period of time required for the delivery, and may determine whether or not this period of time fits between a start time and an end time of work hours.

When a delivery cluster which exceeds the threshold value (does not satisfy the condition) is present ("Y" in Step S205), the delivery cluster determination module 56 moves the delivery destinations between the delivery cluster exceeding the threshold value and another delivery cluster (Step S206). In other words, the delivery cluster determination module 56 moves a delivery destination belonging to the delivery cluster which does not satisfy the condition so that the delivery destination belong to another delivery cluster. More specifically, the delivery cluster determination module 56 repeats the following movement processing until the number of delivery destinations belonging to the delivery cluster determined to exceed the threshold value no longer exceeds the threshold value. The movement processing is such processing that the delivery cluster determination module 56 acquires, among the delivery destinations included in the delivery cluster exceeding the threshold value, a delivery destination having the largest maximum value of the belonging probability corresponding to another delivery cluster, and moves the delivery destination to the other delivery cluster corresponding to the maximum belonging probability when, even after the delivery destination is moved to the other cluster, the other delivery cluster still satisfies the condition relating to the delivery. The movement processing described above may be executed until the condition for the sum of the weights or the volumes of the packages is satisfied.

Meanwhile, when any delivery cluster which exceeds the threshold value (does not satisfy the condition) is not present ("N" in Step S205), the delivery cluster determination module 56 skips the processing step of Step S206.

After that, the delivery cluster determination module 56 outputs, for each of the delivery clusters, delivery person corresponding to a delivery cluster to which the plurality of delivery destinations belong as delivery persons responsible for the delivery destinations (Step S207). More specifically, this processing may be such processing that the delivery cluster determination module 56 outputs the plurality of delivery destinations belonging to each of the delivery clusters as a list of the delivery destinations. The list of the delivery destinations is assigned to a delivery person corresponding to the delivery cluster including the delivery destinations. Moreover, the output destination may be the storage unit 12 or the route determination module 57. The assigned delivery person may be a vehicle for the delivery.

After that, the route determination module 57 determines route passing through the delivery destinations assigned to each delivery person (Step S208) . The method of determining the route is publicly known, and hence a detailed description thereof is omitted.

The at least one embodiment provides various effects. The state such as the presence of roads, which cannot be considered through simple clustering, can be reflected in the assignment to the delivery persons by generating the training data through use of the clustering of the delivery destination lists of FIG. 3 and training the machine learning model 53 based on this training data. With this configuration, it is possible to prevent, to a certain degree, delivery destinations in two regions without an effective road therebetween from being assigned to a certain delivery person. Moreover, it is possible to fix, to a certain degree, an area for which a delivery person is responsible by assigning the delivery destinations to the delivery person through use of the delivery cluster. As a result, it is possible to increase a service level through experience of the delivery person, to thereby increase performance of the delivery.

Moreover, it is possible to improve the balance among the numbers of delivery destinations belonging to the delivery clusters by the method of training of FIG. 5, and to use the output result of the machine learning model 53 to adjust the delivery clusters in Step S205 and Step S206 of FIG. 6 in an a posteriori manner. With those configurations, it is possible to prevent unrealistic assignment of the delivery destinations and the packages to the delivery persons.

In the at least one embodiment, the machine learning model is used when the delivery destinations are classified into the delivery clusters corresponding to the delivery persons, and the general clustering method is used to generate the training data. The method of using the machine learning model and using the general clustering method to generate the training data is highly flexible in processing, and facilitates addition of processing. Thus, the above-mentioned various effects can easily be achieved. This feature is very useful for the assignment of the delivery destinations to the delivery persons, which requires consideration of various conditions.

While there have been described what are at present considered to be certain embodiments of the invention, it will be understood that various modifications may be made thereto, and it is intended that the appended claims cover all such modifications as fall within the true spirit and scope of the invention.

## Claims

1. A delivery management system, comprising:

   a training data generation means for generating, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and
   a training means for inputting, to a machine learning model, the delivery destination information on the plurality of delivery destinations included in the training data, and for training the machine learning model based on information indicating predicted delivery clusters, which is output from the machine learning model, and based on the delivery clusters into which the plurality of delivery destinations are classified, and which are included in the training data.

2. The delivery management system according to claim 1, wherein the clustering processing includes acquiring a representative position of each of a plurality of past delivery destination lists each of which includes a plurality of delivery destinations of delivery executed by one delivery person, executing clustering of classifying the plurality of past delivery destination lists into preliminary clusters based on the acquired representative positions, and determining delivery destinations belonging to a plurality of delivery clusters included in the training data based on the preliminary clusters into which the plurality of past delivery destination lists are classified and based on the plurality of delivery destinations included in the plurality of past delivery destination lists.

3. The delivery management system according to claim 1 or 2, wherein the training means is configured to:

   calculate, based on each of delivery clusters predicted for each of the plurality of delivery destinations, the number of delivery destinations included in each of the predicted delivery clusters;

determine a loss function based on the number of delivery destinations calculated for each of the predicted delivery clusters and a reference value of the number of delivery destinations; calculate a value of the loss function based on the predicted delivery clusters and the delivery clusters in the training data; and train the machine learning model based on the calculated value.

4. The delivery management system according to any one of claims 1 to 3, wherein the training means is configured to:

calculate, based on each of delivery clusters predicted for each of the plurality of delivery destinations, a representative position of each of the predicted delivery clusters; determine a loss function based on the representative positions calculated for the predicted delivery clusters and representative positions of the delivery clusters in the training data; calculate a value of the loss function based on the predicted delivery clusters and the delivery clusters in the training data; and train the machine learning model based on the calculated value.

5. The delivery management system according to any one of claims 1 to 4, further comprising a delivery cluster determination means for inputting delivery destination information on delivery destinations into the machine learning model trained by the training means, and for determining delivery clusters to which the input delivery destinations belong based on the information indicating the delivery clusters, which is output from the machine learning model.

6. The delivery management system according to claim 5,

wherein the machine learning model is configured to output, when the delivery destination information on one of the delivery destinations is input, a value indicating a probability that the input delivery destination belongs to each of the plurality of delivery clusters, and wherein the delivery cluster determination means is configured to determine a delivery cluster to which the input delivery destination belongs based on the values indicating the probability.

7. The delivery management system according to claim 6, wherein the delivery cluster determination means is configured to move, when any one of the determined delivery clusters to which the delivery destinations belong dissatisfy a predetermined condition, based on the value indicating the probability, a delivery destination belonging to one of the delivery clusters dissatisfying the predetermined condition so that the delivery destination belongs to another delivery cluster.

8. A delivery management method, comprising:

generating, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and inputting, to a machine learning model, the delivery destination information on the plurality of delivery destinations included in the training data, and training the machine learning model based on information indicating predicted delivery clusters, which is output from the machine learning model, and based on the delivery clusters into which the plurality of delivery destinations are classified, and which are included in the training data.

9. A program for causing a computer to function as:

a training data generation means configured to generate, through clustering processing, training data including: delivery destination information on a plurality of delivery destinations, the delivery destination information including information indicating positions of past delivery destinations; and ground truth data indicating delivery clusters into each of which a corresponding one of the plurality of delivery destinations is classified, and each of which is associated with a delivery person; and a training means configured to input, to a machine learning model, the delivery destination information on the plurality of delivery destinations included in the training data, and to train the machine learning model based on information indicating predicted delivery clusters, which is output from the machine learning model, and based on the delivery clusters into which the plurality of delivery destinations are classified, and which are included in the training data.

# FIG.1

DELIVERY MANAGEMENT DEVICE $\sim$1

11 12

| PROCESSOR | STORAGE UNIT |

| COMMUNICATION UNIT | INPUT/ OUTPUT UNIT |

13 14

# FIG.2

TRAINING DATA
GENERATION
MODULE
_51_

MODEL TRAINING
MODULE
_52_

DELIVERY
DESTINATION
ACQUISITION MODULE
_55_

DELIVERY CLUSTER
DETERMINATION
MODULE
_56_

ROUTE
DETERMINATION
MODULE
_57_

MACHINE LEARNING
MODEL
_53_

# FIG.3

START

ACQUIRE PLURALITY OF PAST DELIVERY DESTINATION LISTS EACH INCLUDING PLURALITY OF DELIVERY DESTINATIONS ~S101

OBTAIN CENTER OF GRAVITY OF EACH OF PLURALITY OF PAST DELIVERY DESTINATION LISTS ~S102

CLUSTER DELIVERY DESTINATION LISTS INTO PRELIMINARY CLUSTERS BASED ON CENTERS OF GRAVITY ~S103

DETERMINE DELIVERY DESTINATIONS BELONGING TO DELIVERY CLUSTERS BASED ON PRELIMINARY CLUSTERS ~S104

CALCULATE CENTER OF GRAVITY OF EACH OF DELIVERY CLUSTERS ~S105

DETERMINE TRAINING DATA INCLUDING DELIVERY DESTINATIONS ~S106

END

# FIG.4

# FIG.5

```
           START

ACQUIRE TRAINING DATA INCLUDING
DELIVERY DESTINATION INFORMATION      ~S151
    AND DELIVERY CLUSTERS

    INPUT DELIVERY DESTINATION
  INFORMATION TO MACHINE LEARNING     ~S152
    MODEL, AND ACQUIRE OUTPUT

  CALCULATE VALUE OF LOSS FUNCTION
BASED ON OUTPUT OF MACHINE LEARNING
    MODEL AND GROUND TRUTH DATA        ~S153
  INCLUDED IN TRAINING DATA TO TRAIN
     MACHINE LEARNING MODEL

DETERMINE DELIVERY CLUSTER TO WHICH
  EACH DELIVERY DESTINATION BELONGS    ~S155
         BASED ON OUTPUT

   CALCULATE CENTER OF GRAVITY AND
 NUMBER OF DELIVERY DESTINATIONS OF    ~S156
     EACH DELIVERY CLUSTER

  DETERMINE LOSS FUNCTION BASED ON
CALCULATED CENTERS OF GRAVITY AND      ~S157
  NUMBERS OF DELIVERY DESTINATIONS

                                        S158
   FINISH CONDITION FOR TRAINING IS
              SATISFIED?
  N

            Y

            END
```

# FIG.6

```
        ┌─────────────┐
        │    START    │
        └─────────────┘
               │
               ▼
┌──────────────────────────────┐
│   ACQUIRE DELIVERY DESTINATION │
│ INFORMATION ON PLURALITY DELIVERY│ ~ S201
│   DESTINATIONS TO BE ASSIGNED  │
└──────────────────────────────┘
               │
               ▼
┌──────────────────────────────┐
│      INPUT DELIVERY DESTINATION │
│    INFORMATION TO TRAINED MACHINE│
│ LEARNING MODEL AND OBTAIN BELONGING│ ~ S202
│   PROBABILITIES FOR EACH OF DELIVERY│
│        CLUSTERS AS OUTPUT      │
└──────────────────────────────┘
               │
               ▼
┌──────────────────────────────┐
│  CAUSE EACH DELIVERY DESTINATION TO│
│     BELONG TO DELIVERY CLUSTER  │ ~ S203
│ CORRESPONDING TO HIGHEST BELONGING│
│           PROBABILITY          │
└──────────────────────────────┘
               │
               ▼
┌──────────────────────────────┐
│    CALCULATE NUMBER OF DELIVERY │
│   DESTINATIONS INCLUDED IN EACH │ ~ S204
│        DELIVERY CLUSTER        │
└──────────────────────────────┘
               │
               ▼
       DELIVERY CLUSTER HAVING NUMBER OF    S205
   N   DELIVERY DESTINATIONS EXCEEDING
       THRESHOLD VALUE IS PRESENT?
               │ Y
               ▼
┌──────────────────────────────┐
│  MOVE DELIVERY DESTINATIONS BETWEEN│
│     DELIVERY CLUSTER EXCEEDING  │ ~ S206
│    THRESHOLD VALUE AND ANOTHER  │
│        DELIVERY CLUSTER        │
└──────────────────────────────┘
               │
               ▼
┌──────────────────────────────┐
│ OUTPUT DELIVERY PERSON CORRESPONDING│
│ TO DELIVERY CLUSTER TO WHICH PLURALITY│ ~ S207
│  OF DELIVERY DESTINATIONS BELONG AS│
│    DELIVERY PERSON RESPONSIBLE FOR│
│        DELIVERY DESTINATIONS   │
└──────────────────────────────┘
               │
               ▼
┌──────────────────────────────┐
│  DETERMINE ROUTE PASSING THROUGH│
│ DELIVERY DESTINATIONS ASSIGNED TO│ ~ S208
│         DELIVERY PERSON        │
└──────────────────────────────┘
               │
               ▼
        ┌─────────────┐
        │     END     │
        └─────────────┘
```

Europäisches
Patentamt

European
Patent Office

Office européen
des brevets

# EUROPEAN SEARCH REPORT

**Application Number**

**EP 22 19 1437**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/040999 A1 (GO PEOPLE PTY LTD [AU]) 7 March 2019 (2019-03-07) * paragraphs [0001], [0021] – [0024], [0060] – [0065] * ----- | 1-9 | INV. G06Q10/083 G06Q10/0631 G06Q10/04 G06N20/00 |
| A | US 2020/372295 A1 (JANSEN AREN [US] ET AL) 26 November 2020 (2020-11-26) * paragraphs [0005] – [0007] * ----- | 1-9 | |

**TECHNICAL FIELDS
SEARCHED      (IPC)**

G06Q
G06N

The present search report has been drawn up for all claims

| Place of search | Date of completion of the search | Examiner |
|---|---|---|
| Munich | 9 January 2023 | Breidenich, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 1437

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2023

| Patent document cited in search report | Publication date | Patent family member(s) | Publication date |
|---|---|---|---|
| WO 2019040999 A1 | 07-03-2019 | NONE | |
| US 2020372295 A1 | 26-11-2020 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021510866 A